# EUROPEAN PATENT APPLICATION

(11) **EP 4 682 307 A1**
(43) Date of publication of application: **21.01.2026**
(21) Application number: 25189689.0
(22) Date of filing: 15.07.2025
(51) Int. Cl.: D06F 93/00, D06F 95/00

(54) **DIRTY LAUNDRY HANDLING DEVICE AND METHOD**

(30) Priority: 15.07.2024 NL 2038228
(71) Applicant: Van Remundt Beheer B.V., 2408 AP Alphen Aan Den Rijn (NL)
(72) Inventor: VAN REMUNDT, Nicolaas Hyacinthus Maria, 2401 LP ALPHEN AAN DEN RIJN (NL)
(74) Representative: EP&C

(57) **Abstract**

Dirty laundry handling device, comprising: a transporter for transporting dirty laundry along transportation path, extending from an input section of the transporter, where laundry enters the transporter, towards a processing section, where laundry is processed, e.g. sorted and/or cleaned; a separation device arranged at or near the transporter between the input section and the processing section and configured to separate the laundry into separate laundry pieces that can be processed individually; a marker detector configured to provide a marker signal representative for detection of a laundry marker, e.g. a label or RFID chip, in the laundry piece transported along the transportation path; wherein the dirty laundry handling device further comprises: a marking location configured to receive a piece of laundry for marking, e.g. by providing a label or RFID chip thereto; and an ejection device, functionally associated with the marker detector and configured to move unmarked laundry, for which no marker is represented in the marker signal, towards the marking location.

## Description

### Field of the invention

The present invention relates to a dirty laundry handling device, a dirty laundry handling assembly and a method for sorting dirty laundry.

### Background of the invention

Presently, dirty laundry handling devices require a relatively large amount of human labour. In particular, laundry pieces are usually fed separately, i.e. one by one, into an input location of the device in order to allow individual scanning of markers and processing. The disadvantage of known devices is that the speed of further processing and scanning thereby depends on the input speed of the operator. Moreover, the pieces of clothing, which may be very dirty before washing, all need to be handled manually to be placed individually at the input location.

Thereby, each garment is individually checked for the presence of a marking, so that after further processing, e.g. washing, the processed, e.g. cleaned, piece can be send back to the same origin. In case a laundry piece is not provided with a marking, such as a label, the operator applies a new marking himself. This requires time from the operator and thus interrupts the input of new garments. As a result, the capacity, e.g. the number of laundry pieces processed over time, of known handling devices is relatively low.

Moreover, a relatively large amount of interaction is required between the operator and (in some cases very) dirty laundry, which can reduce an operator's job satisfaction and manual manipulation of laundry may also cause unnecessary for further spread of dirt, e.g. stains, on the laundry.

US4036365A discloses a method and system for conveying sorting articles, whereby each article is grasped and moved past a detector which identifies the article and causes it to be dropped to fall into a selected one of a plurality of containers. Each article can be provided with a predetermined quantity of fluorescent materials that forms a code for identifying the article.

EP290578A1 discloses a laundry sorting system comprising an imaging device for deriving information about laundry items that are not provided with a data carrier or whose data carrier cannot be read out.

US5248177A discloses a pickup device comprising a pair of jaws that are pivotable about a pivot axis on one outer end. The other outer end of the jaws includes a fabric contact surface that grips a fabric by rotation about the pivot axis.

However, it has been found that a disadvantage of grippers presently used for gripping clean laundry, is that they are presently limitedly suitable for sorting dirty laundry, e.g. laundry from hospitals or nursing homes. Known grippers are able to grip laundry with a limited effectivity. Known grippers require a relatively neatly folded staple of laundry in order for the gripping to succeed. Further, the rollers may need to be provided with a special coating or material in order to obtain the required friction.

Known grippers need to be designed to the specific type of laundry that is expected. In case the laundry is changed or the type of laundry varies, it has been found that the known textile grippers do not function satisfactory.

It has been found that various properties, e.g. type of laundry, model, fabric thickness and material, pockets, seams, buttons and stains may all influence the friction and therewith the gripping result. Even positioning and environmental influences may change the friction and thereby cause variation in gripping result, rendering the known grippers relatively unsatisfactory, especially in conditions with unpredictable friction, e.g. in varying and/or dirty laundry.

As a result, multiple tries are necessary before a single piece of laundry is gripped properly and handling laundry requires a relatively large amount of time. For example, a single gripper may try to grip laundry, after which sensors are required to determine whether laundry is gripped at all, and if laundry has indeed been gripped, whether the desired amount of laundry is gripped, e.g. a single piece, after which repetition of the process may be necessary. As an alternative, it has been found that multiple grippers of a claw-type may be used, which need to be arranged in series, such laundry is first gripped by a first gripper, and subsequently by a second gripper from a different angle, etc. It has been found that this way, each subsequent gripper reduces the chance of gripping multiple pieces of laundry at once. However, each subsequent gripper increases required space for the device, required handling time and the chance of gripping no laundry, and still multiple pieces may be gripped, which would further reduce the capacity of the dirty laundry handling device.

### Object of the invention

It is therefore an object of the present invention to provide a dirty laundry handling device that at least partially overcomes the disadvantages of the prior art or to provide an alternative dirty laundry handling device, for example a handling device that requires less human labour, less manual handling of (very) dirty laundry, a dirty laundry handling device that allows for easier provision of markers on unmarked laundry and/or that does not require laundry pieces to be fed separately or individually into an input location to allow individual scanning of markers and processing and/or that has a higher processing capacity.

### Description of the invention

The present invention provides a dirty laundry handling device according to claim 1. The dirty laundry handling device is suited for handling dirty laundry, e.g. in a laundry collection, sorting or washing system, and comprises a transporter for transporting dirty laundry along transportation path, extending from an input section of the transporter, where laundry enters the transporter, towards a processing section, where laundry is processed, e.g. sorted and/or cleaned. The transporter may comprise the input section and the processing section.

The handling device comprises a separation device arranged at or near the transporter between the input section and the processing section and configured to separate the laundry into separate laundry pieces that can be processed individually and a marker detector configured to provide a marker signal representative for detection of a laundry marker, e.g. a label or RFID chip, in the laundry piece transported along the transportation path.

The marker detector may be configured to provide a marker signal that is representative for an origin and/or type of the provided dirty laundry, as provided in the marker.

The dirty laundry handling device further comprises a marking location configured to receive a piece of laundry for marking, e.g. by providing a label or RFID chip thereto; and an ejection device, functionally associated with the marker detector and configured to move unmarked laundry, for which no marker is represented in the marker signal, towards the marking location.

Therewith, separation, checking of presence of markers and scanning of markers can be performed by the handling device, such that laundry can be provided at the input location manually, but does not need to be separated, after which further steps are performed by the handling device.

As a result, input speed of laundry is no longer dependent on the time required for manually separating the laundry, manually checking the presence of a marker on each laundry piece. Hence, laundry may be input in bulk, i.e. multiple laundry pieces at a time at the input location, and the capacity of the handling device is relatively high.

Further, using the handling device according to the intervention, a relatively low amount of interaction is required between the operator and the dirty laundry, as separation, detection of markers and moving the laundry towards the marking location are performed automatically. Therewith, job satisfaction of an operator with the handling device is relatively good and further spread of dirt due to manual manipulation of the laundry may be reduced compared to the prior art.

The handling device is suitable for handling dirty laundry, e.g. for moving the dirty laundry from the input section towards a processing section and/or towards the marking location. In addition to dirty laundry, the handling device may be suited for clean laundry and other dirty and/or clean textiles. Textiles, as used herein, is understood as any type of clothing or fabric, being from fibres-like materials, e.g. fibres, yarns, filaments, threads, etc. that are made through weaving, sewing, stitching, knitting or any other technique.

The input section may be configured to receive unseparated laundry pieces, e.g. laundry in bulk. The input section may for example comprise an emptying facility on or in which a container provided with dirty laundry can be emptied. The input section may comprise a spreading section on which the dirty laundry can be spread out. The input location may be arranged to transport laundry from the input location within a predetermined maximum height and/or within a predetermined maximum quantity further along the transport path. The input location may include a shearing device arranged to shear off a pile of laundry. As such, it may be guaranteed that the separation device and/or marker detector can function properly, e.g. not overload and/or come into contact with dirty laundry.

Multiple input and/or processing sections may be provided, wherein the transporter is configured to move the laundry between a selected one of the input and/or processing locations, e.g. for sorting the laundry. The transporter may for example comprise a belt, suspended transporter or other type of conveyor arranged along the entire or a part of the transportation path.

The separation device may be configured to move laundry pieces with respect to each other, e.g. to obtain a minimum distance between the respective laundry pieces. The separation device may for example comprise a vibratory conveyor, a beater, blow-off device, push-off device a brush and/or a gripper. The separation device may be configured to move laundry pieces pas the marker detector. As such, multiple functions can be performed by a single separation device, which may contribute to reducing handling time and increasing capacity of the handling device.

The marker detector may comprise a sensor and/or a camera. The sensor may be configured to detect electromagnetic radiation, wherein the marker detector is configured to detect presence of an electromagnetic marker, e.g. from a NFC or RFID chip, in the detected radiation. The sensor may e.g. be configured to detect low (LF) high (HF) and/or ultra-high (UHF) frequency radiation. The camera may be configured to capture images of laundry pieces, wherein the marker detector is configured to detect the presence of an optical marker, e.g. a label in the captured images.

The marking location may be arranged to label laundry manually and/or automatically. The marking location may be located near the input location, for example adjacent to the input location, and/or be arranged to move laundry pieces to the input location after marking. The marking location may be the location on the ejection device on which the laundry is marked, or be located near the ejection device, for example wherein the ejection device comprises a removal location for unmarked laundry, where unmarked laundry can manually be taken from the removal location to be marked at the marking location.

The ejection device may extend along an ejection path, e.g. from the transporter and/or the separation device towards the marking location, and/or from one or more locations on the transporter or multiple transporters toward one or more marking locations.

The ejection device may be arranged to move laundry pieces from the separation device towards the marking location. The ejection device may be arranged similarly to the transporter and/or include other elements and for example comprise a belt, suspended transporter or other type of conveyor arranged along the entire or a part of the ejection path. By having the ejection device, if no marker is present on a laundry piece, the respective laundry piece can be marked at the marking location without requiring moving the laundry to the marking location manually and/or with less manual movement of the laundry piece to the marking location. Thereby input of laundry does not need to be interrupted when a laundry piece is unmarked, an marking can be performed later. For example, input of laundry can be performed while moving an unmarked laundry piece with the ejection device. As a result, input speed of laundry is no longer dependent on the time required for manually moving unmarked laundry, which further contributes to the capacity of the handling device and the low amount of interaction required between the operator and the dirty laundry.

The dirty laundry handling device may comprise a laundry property acquisition unit. The laundry property acquisition unit may be configured to acquire laundry property information representative for a property, e.g. a type or origin, of a piece of laundry, related to a piece of unmarked laundry. In particular, the laundry handling device is configured to acquire laundry property information for a piece of unmarked laundry that is moved by the ejection device, and/or that is received at the marking location. The unit may be free from any sensors, e.g. from cameras.

The laundry property acquisition unit may be operatively connected to the marker detector and configured to determine the laundry property information on the basis of the marker signal. The laundry property acquisition unit may comprise an input unit for manual input of a laundry property, e.g. comprise a keyboard or touchscreen. Additionally and/or alternatively the laundry property acquisition unit may comprise a receiver for receiving laundry property information from an external source, e.g. via internet, via Bluetooth, etc. The laundry property acquisition unit may comprise a sensor, e.g. an optical scanner for scanning a bar code or QR code provided with laundry property information. For example, laundry property information may be associated with a bag or container provided with the dirty laundry, and be provided via a text, separate label or chip, bar code, QR code, et cetera. The laundry property acquisition unit may be configured to acquire laundry property information automatically, e.g. when unmarked laundry is moved with the ejection device and/or received at the marking location, and/or the acquisition unit may be configured to acquire the information upon receipt of input, e.g. from an operator.

The marker detector, the laundry property acquisition unit and/or the marker preparation unit may be operatively coupled to each other. Alternatively, the marker preparation unit may for example operate independently. The marker preparation unit may be provided with an input unit, such that the laundry property information is manually provided to the marker preparation unit by a operator, for example upon reading the information from the laundry property acquisition unit, which may comprise a visual indicator, e.g. a display for displaying laundry property information.

The dirty laundry handling device may further comprise a marker preparation unit for preparing a marker by associating the respective acquired laundry property information for the respective piece of unmarked laundry with a marker provided at the marking location. The marker preparation unit may be configured to transmit the information to the laundry marker, e.g. by writing the information to laundry marker, e.g. to the label or to the RFID chip. Additionally and/or alternatively, the laundry marker may be representative for an identifier, wherein the laundry marker preparation unit is configured to couple the respective identifier to the respective laundry property information externally, e.g. in a database.

It has been found that by having a laundry property acquisition unit and a marker preparation unit, marking unmarked laundry has become relatively efficient, as steps of manually retrieving laundry properties (e.g. to find out what is the origin or type of this respective piece of unmarked laundry) may now be omitted. In particular, the manual labour may be reduced to taking a marker received at the marking location and taking the piece of laundry received from the ejection device, and providing the respective marker on the respective piece of laundry. The order of the markers and pieces of unmarked laundry may be such that no human checking of correspondence between the respective piece of laundry and the respective marker may be necessary any more.

In an embodiment, the laundry property acquisition unit is configured to acquire laundry property information for a piece of unmarked laundry on the basis of the laundry property information of neighbouring laundry that is located, within a predetermined range from the piece of unmarked laundry. It has been found that laundry provided at the input location is often provided in batches, e.g. per container or per bag of laundry, and that the laundry within a batch is often provided with at least one similar laundry property, e.g. origin or owner of the laundry. By determining the laundry property of neighbouring laundry, the actual laundry property of unmarked laundry may be determined.

The neighbouring laundry may be all laundry that is provided at the input location together with the piece of unmarked laundry, and/or laundry provided at the input location within a predetermined timeframe and/or at a predetermined distance. For example, a predetermined number of laundry items before and / or after the unmarked laundry item may be regarded as neighbouring laundry. The neighbouring laundry may be the at most 2 items before and/or after the piece of unmarked laundry, e.g. the at most 4 items before and/or after.

In an embodiment, the laundry property information for a piece of unmarked laundry is determined on the basis of the marker signal received for the respective neighbouring laundry. The laundry marker provided in a piece of laundry may encode a laundry property as type and/or origin, e.g. an owner. Thus, upon detection of the marker signal, the marker signal may also be representative for the laundry property. By measuring a marker signal on neighbouring laundry, the laundry property information may be determined for the piece of unmarked laundry relatively efficiently. As such, operator labour and/or handling capacity of the dirty laundry handling device may be further improved.

In an embodiment, the separation device is configured to provide laundry pieces towards the ejection device or towards the processing section in dependence on the marker signal. This way, the steps of separating the laundry and ejecting unmarked laundry can be combined, which further contributes to efficiency and therewith capacity of the handling device. The separation device may for example be arranged in the area of the ejection device and the transporter, for example between the ejection device and the transporter.

In an embodiment, the transporter and/or the ejection device comprises a buffer section configured to buffer input laundry and/or unmarked laundry, respectively, such that the separation device and/or marker detector may continue to function even when temporarily no laundry is provided at the input section and/or when provided laundry comprises an unmarked laundry piece. By buffering, i.e. temporarily storing, laundry, laundry may be provided at the input section in batches. For example, unmarked laundry can be marked by the same operator that provides laundry at the input section, e.g. without interrupting the transporter, separation device and/or marker detector as they continue to function using laundry from the buffer section. As such, the capacity of the handling device is further improved. The handling device may be configured to function continuously as long as laundry is provided in the buffer section.

In an embodiment, the ejection device is configured to buffer unmarked pieces of laundry. This way, an operator may continue to provide laundry at the input section, even when unmarked laundry is detected, as the unmarked laundry can be buffered, i.e. temporarily stored.

The ejection device may store the unmarked pieces of laundry in bulk. However, this would require manual handling and/or separation before the respective laundry pieces can be marked.

In an embodiment, the laundry property acquisition unit and the marker preparation unit are configured to cooperate with the buffer section, such that pieces of unmarked laundry from the buffer section and respective corresponding markers associated with acquired laundry property information are provided at the marking location in the same order.

In an embodiment, the ejection device is configured to eject unmarked laundry pieces separately from each other. The ejection device may be configured to buffer unmarked pieces of laundry separately from each other. When ejected laundry pieces are buffered separately, no separation before marking may be required. As such, manual handling may be further reduced and capacity may be improved.

In an embodiment, the ejection device comprises an ejection entry, configured to receive ejected laundry, and an ejection buffer, comprising multiple buffer positions and configured to buffer unmarked laundry, wherein the ejection device is configured to move each unmarked laundry piece past the multiple buffer positions towards the marking location.

By having multiple buffer positions, multiple pieces of unmarked laundry may be buffered separately from each other. As such, an amount of laundry marked at the marking unit may vary from an amount of laundry provided at the ejection entry section. Each piece of laundry may successive be moved past each of the buffer positions, e.g. in a discrete way, or continuously, e.g. by being moved on a belt past the buffer positions. Alternatively, each piece of laundry may be buffered at one of the buffer positions and then be immediately provided towards the marking location for marking.

For example, each time an unmarked laundry piece is provided at the ejection entry and/or each time a piece of laundry is marked, the buffered laundry pieces may be moved from one of the buffer positions to an adjacent one of the buffer position up to the marking location. This way, a waiting time for an operator before an unmarked piece of laundry arrives at the marking location can be kept relatively low, which contributes to the handling capacity of the handling device.

In an embodiment, the ejection device comprises a conveyor extending between ejection entry and the marking location. As such, unmarked laundry can be moved from the ejection entry towards the marking location, e.g. automatically, to further improve handling capacity. The ejection entry may be located near the separation device, e.g. below the separation device. The conveyor may extend over at least 50%, for example at least 75% of the distance between the ejection entry and the marking location.

In an embodiment, the marking location is provided in the area of the input section, e.g. adjacent to the input section. This way, an operator may operate the handling device, e.g. providing laundry at the input section and/or marking unmarked laundry from the area of the input section, which reduces a walking distance and waiting time for the operator. As such, the handling device may for example be configured to be operated by a single operator.

The marker detector may be arranged, along the transportation path, after the separation device, i.e. after a first separation point thereof, e.g. after a gripping position of a gripper, and be configured to detect a marker for each separated laundry piece individually. Alternatively, the marker detector may be configured to recognise unseparated laundry pieces, e.g. even when not spatially separated from each other, and be configured to detect a marker for each recognised one of the laundry pieces.

In an additional and/or alternative embodiment, the marker detector is arranged with respect to the transporter such that laundry arranged on the transporter cannot be detected by the marker detector, e.g. by having a distance between the marker detector and the transporter, wherein the separation device, e.g. a textile gripper, is configured to move transported laundry from the transporter and towards the marker detector, such that the laundry piece can be detected by the marker detector. As such, separation and detection of a marker signal can be combined to enhance handling capacity of the handling device. Further, the chances of false detections and/or errors due to influences on the laundry between the time the laundry is separated and markers are detected may be reduced.

The separation device may be configured to move the laundry pieces within a predetermined distance to the marker detector. Additionally or alternatively, the marker detector may be provided with another form of shielding, and the separation device or transporter may be configured to move the laundry pieces past the shielding in order to be detectable by the marker detector.

In an embodiment, the separation device is configured to remove laundry from the transporter for separation, and to position laundry on the transporter and/or the ejector in dependence on the marker signal. The separation device may be configured to, upon detection of a marker in the marker signal, allow further movement of the respective separated piece of laundry along the transportation path, e.g. towards processing section, and to, when no marker is represented in the marker signal, arrange the respective piece of laundry on the ejection device.

In an embodiment, the dirty laundry handling device comprises a textile gripper. The textile gripper may be configured for handling laundry towards and/or away from the transporter, e.g. to grip and separate laundry arranged on the transporter. It has been found that this way, manual interaction may be further reduced and/or handling capacity may be further improved.

The gripper may be configured to move laundry past the marker detector. The gripper may be configured to move laundry towards the processing section and/or to the ejection device in dependence of the marker signal. The dirty handling device may comprise multiple textile grippers, e.g. arranged parallel to each other. The multiple textile grippers may be arranged to operate simultaneously and/or independently from each other. As such, a relatively higher laundry throughput may be achieved.

In an embodiment, the textile gripper comprises a mounting section configured to be attached to a gripper mover to move the textile gripper between at least a laundry input position and a laundry output position. The gripper mover may be configured to move the textile gripper between, e.g. above, the transporter and the ejection device.

In an embodiment, the textile gripper comprises a gripping section attached to the mounting section and comprising a first gripping member having a first gripping surface, e.g. that is rotatable about a first rotation axis, and a second gripping member having a second gripping surface, e.g. that is rotatable about a second rotation axis. By having rotatable gripping members, gripping may be performed by wrinkling the fabric.

In an embodiment, the textile gripper comprises a drive unit coupled to the gripping section and configured to drive the first gripping member and the second gripping member with respect to each other; wherein the first gripping member and the second gripping member are counter-rotatable in opposite directions with respect to each other, such that the counter-rotation allows a piece of laundry to be gripped between the first gripping surface and second gripping surface.

The drive unit may be configured to rotate the first gripping member and/or the second gripping member. The drive unit may be configured to move the first gripping member and/or the second gripping member towards each other, e.g. during the counter-rotation thereof. The first griping member and the second gripping member may each be rotatable about their own respective rotation axis.

In particular, the drive unit may be configured to move the first gripping member and/or the second gripping member towards each other while rotating the first gripping member and/or the second gripping member.

In an embodiment, the gripping members are provided with one or more protruding gripping elements that extend radially outwards from the first and/or second gripping surface, that are arranged with respect to each other to engage with the fabric of a laundry piece and are configured to, with the counter-rotation, provide a wrinkle in the fabric that is gripped between the first and second surfaces.

Therewith, gripping may be provided by the gripping elements protruding into a piece of laundry to be gripped, i.e. deforming the piece of laundry to be gripped. As a result, the gripping force does no longer solely depend on a friction between two relatively flat surfaces, i.e. neatly folded clothing and a roller, such as in the prior art. On the contrary, deformation of the piece of clothing to be gripped, into the surface thereof, i.e. due to the gripping elements protruding therein, now contributes to the gripping force.

As a result, the embodiment allows to provide a wrinkle in the fabric, and therewith to grip the laundry via the wrinkle, relatively less dependent on friction between the gripping member and the laundry, and relatively less dependent on factors that may influence that friction, compared to the prior art. This provides several advantages:
First of all, the textile gripper provides an improved gripping result with friction forces that vary from piece of laundry to another. As such, the invention may be especially advantageous for gripping varying clothing types, for gripping laundry not provided on a neatly folded staple and/or for gripping dirty laundry.

Secondly, the textile gripper may now require less gripping tries before a piece of laundry is gripped successfully; and/or
the textile gripper that has a higher chance of gripping a desired amount of laundry, e.g. to grip a single piece of laundry, compared to the prior art.

Multiple input and/or output positions may be provided, wherein the gripper mover is configured to move the textile gripper to a selected one of the input and/or output positions, e.g. for sorting the laundry. The textile gripper may be arranged on a dirty laundry handling device.

The mounting section may be adapted to be compatible with mounting sections of known textile grippers in order to allow for convenient mounting. The gripper mover may be configured to move the textile gripper above the input and/or output position, e.g. in a horizontal and/or vertical direction. The mounting section may comprise a mounting surface for engaging with the gripper mover, for example via a shape lock, via a snap fit, bolts, pins, glue, screws, etc and/or via a force lock, e.g. by being clamped.

The gripping section may be integral with the mounting section and for example be arranged on an opposite outer end of the gripper. The gripping section may at least partially house the drive unit. The gripping section may comprise a third and/or fourth gripping member.

The drive unit may be configured to drive the first gripping member with respect to the second gripping member, vice versa, or drive both gripping members. A speed of the counter-rotation may be adjustable, e.g. in dependence of properties of the environment or laundry to be gripped.

The gripping elements may protrude perpendicular from the gripping surface and/or skewed thereto, e.g. a longitudinal axis of each gripping element may have an angle of 0-180 degrees with the gripping surface, for example 75-105 degrees with the gripping surface, such as approximately 90 degrees.

All of the gripping members may be provided with at least one or multiple gripping elements. The gripping elements are configured to, with the counter-rotation, engage, i.e. come into contact with, the piece of laundry to be gripped, for example with an exposed upper surface thereof. The term laundry piece as used herein means a single piece of laundry to be gripped.

The gripping elements may be configured to, upon coming into contact with the laundry piece, exert a wrinkling force on the laundry piece in addition to the friction force. The wrinkling force may be a force substantially within the fabric, i.e. acting between an upper surface and a lower surface thereof, instead of on the upper surface thereof. The wrinkling force may be acting in the plane of the fabric of the laundry piece and/or a force acting in upward direction with respect to the plane of the fabric, in contrast with a friction force that is acting on an upper surface plane of the fabric. The plane of the fabric may be understood as a plane between the upper surface plane and the bottom surface plane of the fabric. The gripping elements may be configured to deform the fabric such that in the upper surface side surface sections are formed. The gripping elements may be configured to, with the counter-rotation, exert a wrinkling force on a side surface section of the fabric, in contrast with a friction force that would normally be exerted on a top surface of the fabric only.

The first rotation axis and the second rotation axis may be aligned with each other, e.g. in parallel. The textile gripper may be configured to output a gripped laundry piece by rotating the first gripping member and second gripping member in respective directions opposite to the counter-rotation. The first and/or second gripping surface may be substantially cylindrical. In addition to the gripping elements, the first and/or second gripping surface may comprise a coating, and/or a microscopically or macroscopically structured surface.

In an embodiment, the gripping elements are configured to at least partially protrude into the fabric of a laundry piece. It has been found that by actually protruding into the fabric, a wrinkling force may be provided from within the fabric, rather than from a side surface section of the fabric. The gripping elements may comprise a pricking section configured to prick into a fabric of a laundry piece. Additionally or alternatively, a force and/or movement of the gripper with respect to the laundry piece may be adjusted to obtain a desired amount of protrusion.

The gripping elements may be configured to deform the fabric within a plane of the fabric, e.g. to provide room for the gripping elements.

The gripping elements be substantially cylindrical and for example comprise a circular or oval cross section. The gripping elements may all have the same dimensions or varying dimensions. An outer contour of the gripping elements may be relatively small. It has been found that this way, wear of the fabric due to subsequent deformation during gripping may be reduced. An outer diameter of the gripping elements may e.g. be less than 4 mm, for example less than 2,5 mm. It has been found that such dimensions may surprisingly contribute higher chance of gripping a desired amount of laundry, e.g. to grip a single piece of laundry.

A length of the gripping elements may be relatively small. A length of the gripping elements may be adjustable and/or the gripping elements may be releasably attached to the gripping members. This way, the gripping elements may be adapted, e.g. be replaced, to the circumstances. Further, a relatively short length may advantageously enable gripping a wrinkle in a single layer of fabric, rather than in multiple layers of fabric underneath each other. As such, the chances of gripping a single laundry piece may be increased.

A protruding length of the gripping elements may e.g. be less than 4 mm, such as less than 2,5 mm. It has been found that such dimensions may surprisingly contribute higher chance of gripping a desired amount of laundry, e.g. to grip a single piece of laundry.

A total length of the protruding elements may be larger than the protruding length. The first and second gripping member may for example comprise one or more element slots.

In an embodiment, the gripping elements, towards their respective radial outer ends, comprise a pointed section. The pointed section may for example be conical or frustoconical. A height of the pointed section may e.g. be equal to the protruding length, e.g. be less than 4 mm, such as less than 2,5 mm. It has been found that such dimensions may surprisingly contribute higher chance of gripping a desired amount of laundry, e.g. to grip a single piece of laundry.

In an embodiment, the separation device comprises the textile gripper and the textile gripper is configured to grip laundry from the transporter for separation. The gripper mover and/or drive unit may be configured to, after gripping a laundry piece, move the gripper upwardly away from the transporter. This way, other laundry pieces may fall off the gripped laundry piece and remain on the transporter. The gripper mover and/or drive unit may be configured to, upon gripping, move the gripper past the marker detector for detecting whether a marker is present in the gripped laundry piece.

The gripper mover and/or drive unit may be configured to move the laundry piece along the transportation path.

The gripper may be configured to, when arranged on the transporter, move into a gripping state, e.g. by counter-rotation of the first gripping member and the second gripping member.

The gripper may be configured to, upon provision of a marker signal, move from the gripping state into the open state. In particularity he gripper may be configured to move into the open state above the transporter, e.g. above the processing section, if the marker signal represents a marker in the gripped laundry piece, and to move into the open state above the ejection device, if the marker signal represents no marker in the gripped laundry piece.

The ejection device or the processing section of the transporter may be arranged underneath the marker detector. This way, no further movement of the gripper may be required after detecting a marker or vice versa, such that handling may be performed relatively fast.

The ejection device may be positioned towards the input section with respect to the processing section. As such, when a marker signal represents that no marker is present in the gripped laundry piece, the laundry piece may be released above the ejection device in a position of the gripper that is positioned towards the input section. As such, laundry handling may be performed at an even higher capacity.

In particular, the gripper may be configured to release a gripped laundry piece above the ejection device while moving from the marker detector towards the input section for gripping a new piece of laundry. For example, the gripper may be configured to move towards the processing section only when the marker signal indicates that a marker is present in the gripped laundry piece, such that movement between the marker detector and the processing section is only performed when actually required for the respective gripped piece of laundry. As such, handling time for handling unmarked laundry pieces may be relatively low.

The invention further relates to a laundry handling assembly, comprising at least two dirty laundry handling devices according to any of the embodiments disclosed herein, e.g. each having a capacity of at least 1000 or at least 1200 pieces of laundry per hour, sharing a single marking location and wherein the respective ejection devices are each configured to move laundry to the shared marking location. This way, multiple laundry handling devices may be operated by the same operator(s), i.e. by providing laundry at the input section and/or by marking unmarked laundry at the marking location.

As such, a relatively high handling capacity may be obtained using a relatively low amount of manual labour or operators.

The invention further relates to a laundry handling assembly, comprising a dirty laundry handling devices according to any of the embodiments disclosed herein, and a processing device arranged at the processing section. The processing device may for example comprise a sorting device, a washing and/or drying device and/or a distribution device.

The processing device may be configured to process the laundry pieces in dependence of a laundry property, such as colour or fabric type. The marker detector may for example be configured to detect a laundry property and to provide a marker signal that is representative for the laundry property.

The invention further relates to a method for sorting dirty laundry, comprising the steps of providing dirty laundry, e.g. in bulk, near an input section; separating, with a separation device, the laundry provided at the input section in separate laundry pieces; detecting, with a marker detector, whether a laundry marker, e.g. a visual label or RFID chip, is present in one of the laundry pieces; wherein the method further comprises the step of: when a laundry marker is detected, providing the laundry piece towards the processing section, or when no laundry marker is detected, moving the unmarked laundry piece to a marking location with an ejection device to mark the respective piece of laundry, e.g. by providing a label or RFID chip thereto.

The method may provide similar benefits as described herein for the handling device.

In an embodiment, the method further comprises the step of, when no laundry marker is detected, marking the respective laundry piece at the marking location; and providing the laundry piece again at the input section, wherein the step of marking the unmarked laundry piece is performed simultaneously with the steps of providing dirty laundry and/or separating the provided laundry.

In an embodiment, the method further comprises the steps of: determining an origin and/or type of provided dirty laundry; counting numbers of laundry pieces in dependence of laundry marker detections, and storing the counted number with respective origin and/or type of the laundry; processing the laundry pieces at a processing section; combining processed laundry pieces to obtain a predetermined combination of origin and/or type of laundry pieces; and providing each origin with the respective specific combination of cleaned laundry.

In an embodiment, the method is performed, using the handling device according to any of the embodiments as disclosed herein and therewith provide similar benefits as described herein for the handling device.

### Brief description of drawings

Further characteristics of the invention will be explained below, with reference to embodiments, which are displayed in the appended drawings, in which:
Figure 1 schematically depicts an embodiment of dirty laundry handling device;
Figure 2A schematically depicts a top view of a dirty laundry handling device according to an embodiment;
Figure 2B schematically depicts a side view of the embodiment of Fig. 2A, when the gripper is gripping a laundry piece from the transporter;
Figure 2C schematically depicts a side view of the embodiment of Fig. 2A, when the gripper is gripping the laundry piece and is arranged above the processing section;
Figure 3A schematically depicts a detailed view of the gripper of Fig. 2B, when laundry is provided on the transporter;
Figure 3B schematically depicts the gripper of Fig. 3A, wherein the laundry piece is gripped;
Figure 3C schematically depicts the gripper of Fig. 3A, wherein the laundry piece is passed past the marker detector;
Figure 3D schematically depicts the gripper of Fig. 3A, wherein the laundry piece is dropped on the ejection entry of the ejection device;
Figure 3E schematically depicts the gripper of Fig. 3A, wherein a laundry piece is gripped above the processing section;
Figure 3F schematically depicts the gripper of Fig. 3A, wherein the laundry piece is dropped on the processing section of the transporter;
Figure 4A schematically depicts a perspective view of the textile gripper according to an embodiment compatible with Figs 1-3F, arranged in the open state;
Figure 4B schematically depicts a perspective view of the textile gripper of Fig. 4A, arranged in the gripping state;
Figure 5A schematically depicts a side view of a partial cross section of the textile gripper of Fig. 4A, when arranged on a laundry piece;
Figure 5B schematically depicts a side view of a partial cross section of the textile gripper of Fig. 4B, when gripping the laundry piece;
Figure 6A schematically depicts a side view of an embodiment of a gripping member compatible with the embodiment of Figs. 4A-5B;
Figure 6B schematically depicts a perspective view of the gripping member of Fig. 5A;
Figure 7A schematically depicts a fabric of a laundry piece when protruding elements arranged above the fabric;
Figure 7B schematically depicts an embodiment, wherein the gripping elements engage the fabric of Fig. 7A; and
Figure 7C schematically depicts another embodiment, wherein the gripping elements engage the fabric of Fig. 7A;

Throughout the figures, the same reference numerals are used to refer to corresponding components or to components that have a corresponding function.

### Detailed description of embodiments

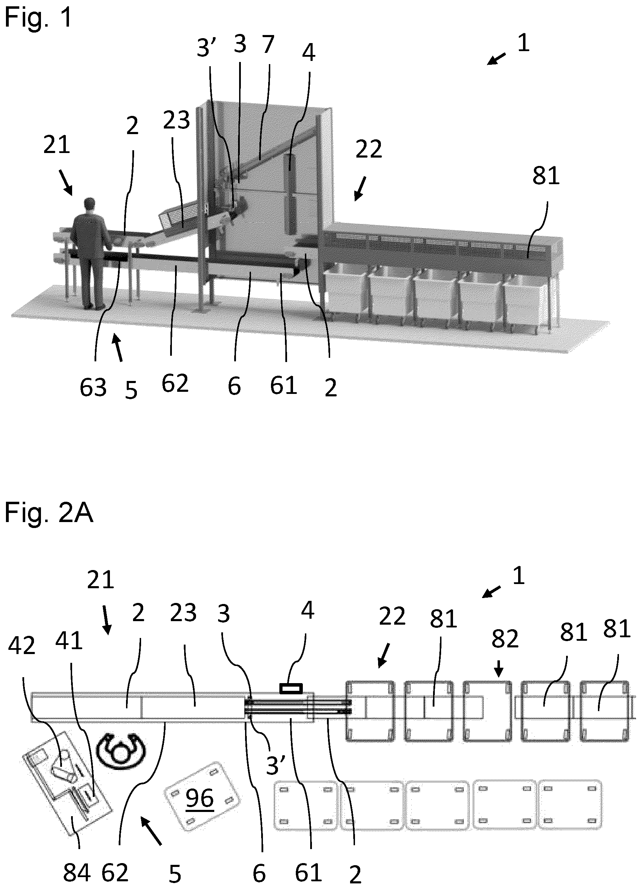

Figure 1 schematically an embodiment of dirty laundry handling device . The dirty laundry handling device 1 is suited for handling dirty laundry, e.g. in a laundry collection, sorting or washing system, and comprises a transporter 2 for transporting dirty laundry along transportation path, extending from an input section 21 of the transporter, where laundry enters the transporter, towards a processing section 22, where laundry is processed, e.g. sorted and/or cleaned. In addition to dirty laundry, the handling device may bee suited for clean laundry and other dirty and/or clean textiles.

The handling device 1 comprises a separation device 3 arranged at or near the transporter 2 between the input section 21 and the processing section 22 and configured to separate the laundry into separate laundry pieces that can be processed individually and a marker detector 4 configured to provide a marker signal representative for detection of a laundry marker, e.g. a label or RFID chip, in the laundry piece transported along the transportation path.

The dirty laundry handling device further comprises a marking location 5 configured to receive a piece of laundry 99 for marking, e.g. by providing a label or RFID chip thereto; and an ejection device 6, functionally associated with the marker detector 4 and configured to move unmarked laundry 97, for which no marker is represented in the marker signal, towards the marking location.

The input section 21 is configured to receive unseparated laundry pieces 98, e.g. laundry in bulk. The input section comprises an emptying facility (not shown) on or in which a container 96 provided with dirty laundry can be emptied. The input section comprises a spreading section on which the dirty laundry can be spread out. The input location may also be arranged to transport laundry from the input location within a predetermined maximum height, e.g. by having an obstacle mounted above the transporter 2 as shearing device, and/or within a predetermined maximum quantity further along the transport path. Multiple input 21 and/or processing 22 sections may be provided, wherein the transporter 2 is configured to move the laundry between a selected one of the input and/or processing locations.

The separation device 3 is configured to move laundry pieces 98, 99 with respect to each other, e.g. to obtain a minimum distance between the respective laundry pieces. The separation device 3 comprises a gripper but may additionally or alternatively for example comprise a vibratory conveyor, a beater, blow-off device, push-off device, a brush and/or another device. The separation device 3 is configured to move laundry pieces past the marker detector 4.

The marker detector 4 comprises a sensor and/or a camera and is configured to detect electromagnetic radiation of an electromagnetic marker, e.g. from a NFC or RFID chip, e.g. low (LF) high (HF) and/or ultra-high (UHF) frequency radiation.

The marking location 5 is located near the input location 21 and arranged to label laundry manually, but may be provided with a marking device for marking automatically and/or be arranged to move laundry pieces to the input location after marking. In this embodiment, the ejection device 6 comprises a removal location 63 for unmarked laundry, where unmarked laundry can manually be taken from the removal location 63 to be marked at the marking location 5. The marking location may alternatively be the removal location 63 on the ejection device 6 on which the laundry is marked. The ejection device 6 extends along an ejection path, from the separation device 3 towards the marking location 5, and/or from one or more locations on the transporter or multiple transporters toward one or more marking locations. The ejection device 6 is arranged to move laundry pieces 97 from the separation device 3 towards the marking location. The ejection device 6 is arranged similarly to the transporter 2 and comprises a belt. This way, the respective laundry piece 97 can be marked at the marking location 5 without requiring moving the laundry to the marking location manually and/or with less manual movement of the laundry piece to the marking location 5. Thereby input of laundry does not need to be interrupted when a laundry piece is unmarked, and marking can be performed later. For example, input of laundry can be performed at input location 21 while moving an unmarked laundry piece 97 with the ejection device 6.

The separation device 3 is configured to provide laundry pieces towards the ejection device 6 or towards the processing section 22 in dependence on the marker signal. The separation device is arranged in the area of the ejection device 6 and the transporter 2, in particular between the ejection device 6 and the transporter 2.

The transporter 2 and/or the ejection device 6 comprises a buffer section 23, 61, respectively, configured to buffer input laundry 98, 99 and/or unmarked laundry 97, , such that the separation device 3 and marker detector 4 may continue to function even when temporarily no laundry is provided at the input section 21, e.g. in batches, and/or when provided laundry comprises an unmarked laundry piece 97. Therewith, unmarked laundry 97 can be marked by the same operator that provides laundry at the input section 21, e.g. without interrupting the transporter 2, separation device 3 and/or marker detector 4 as they continue to function continuously using laundry from the buffer section 23.

The ejection device 6 is configured to eject, i.e. move, and buffer unmarked pieces of laundry 97 separately from each other. The ejection device 6 is configured to buffer unmarked pieces of laundry 97 separately from each other and comprises an ejection entry 61, positioned below the detection position of the separation device 3 and therewith configured to receive ejected, i.e. unmarked, laundry 97, and an ejection buffer 62, comprising multiple buffer positions P and configured to buffer unmarked laundry 97, wherein the ejection device is configured to move each unmarked laundry piece past the multiple buffer positions P, i.e. continuously by moving the belt and/or in a discrete way by moving the belt shortly, towards the marking location 5.

The dirty laundry handling device 1 comprises a laundry property acquisition unit 41 free from cameras and configured to acquire laundry property information representative for a property, in particular a type and/or origin, of unmarked laundry that is moved by the ejection device 6, and that is subsequently received at the marking location.

The laundry property acquisition unit is operatively connected to the marker detector and the marker preparation unit and configured to determine the laundry property information on the basis of the marker signal. Additionally and/or alternatively, the acquisition unit may comprise an input unit for manual input of a laundry property, e.g. comprise a keyboard or touchscreen, or a receiver for receiving laundry property information from an external source, and/or comprise a sensor, e.g. an optical scanner for scanning a bar code or QR code provided with laundry property information. Similarly, the marker preparation unit may be provided with an input unit, such that the laundry property information is manually provided to the marker preparation unit by a operator, for example upon reading the information from the laundry property acquisition unit, which may comprise a visual indicator, e.g. a display for displaying laundry property information.

The dirty laundry handling device further comprises a marker preparation unit 42 for preparing a marker by associating the respective acquired laundry property information for the respective piece of unmarked laundry with a marker provided at the marking location. The marker preparation unit is configured to transmit the information to the laundry marker, in particular by writing the information to laundry marker, e.g. to the label or to the RFID chip. Additionally and/or alternatively, the laundry marker may be representative for an identifier, wherein the laundry marker preparation unit is configured to couple the respective identifier to the respective laundry property information externally, e.g. in a database.

The laundry property acquisition unit 41 and the marker preparation unit 42 are configured to cooperate with the buffer section 6, such that pieces of unmarked laundry from the buffer section 6 and respective corresponding markers associated with acquired laundry property information are provided at the marking location in the same order. As such, an operator may simply take the next piece of unmarked laundry from the buffer section 6, and take the next provided marker from the marker preparation unit 42, and provide the marker to the piece of unmarked laundry.

The ejection device 6 comprises a conveyor extending from ejection entry 61 located near, i.e. below, the separation device 3, towards the marking location 5. The conveyor extends over at least 50%, in particular at least 75% of the distance between the ejection entry 61 and the marking location 5.

The marking location 5 is provided in the area of the input section 21, in particular adjacent to the input section 21 and the handling device 1 is configured to be operated by a single operator.

The marker detector 4 is arranged, along the transportation path, after the gripping position of the separation device 3 and is configured to detect a marker for each separated laundry piece individually. Alternatively, the marker detector may be arranged elsewhere along the transporter 2 and be configured to recognise unseparated laundry pieces, e.g. even when not spatially separated from each other, and be configured to detect a marker for each recognised one of the laundry pieces.

The marker detector 4 is arranged with respect to the transporter 2 such that laundry arranged on the transporter 2 cannot be detected by the marker detector 4, by having a distance between the marker detector 4 and the transporter 2.

The laundry property acquisition unit is configured to acquire laundry property information for a piece of unmarked laundry on the basis of the laundry property information of neighbouring laundry that is located, within a predetermined range from the piece of unmarked laundry, and/or laundry provided at the input location within a predetermined timeframe and/or at a predetermined distance. For example, a predetermined number of laundry items before and / or after the unmarked laundry item may be regarded as neighbouring laundry. The neighbouring laundry may be the at most 2 items before and/or after the piece of unmarked laundry, e.g. the at most 4 items before and/or after.

The laundry property information for a piece of unmarked laundry is determined on the basis of the marker signal received for the respective neighbouring laundry and encodes for a laundry property, such as type and/or origin, e.g. an owner. Thus, upon detection of the marker signal, the marker signal is also representative for the laundry property.

The separation device 3 is a textile gripper. In particular, multiple textile grippers 3, 3' may be provided, each independently operable, such that the capacity of the handling device is increased. Although two grippers are depicted, any number of textile grippers may be provided parallel to each other, e.g. the with of the input section 21, processing section 22 and/or ejection device 6 may be adjusted to the number of textile grippers.

The separation device 3, e.g. a textile gripper 32, is configured to move transported laundry 98, 99 from the transporter 2 and towards the marker detector 4 within a predetermine distance, such that the laundry piece 99 can be detected by the marker detector 4. Additionally or alternatively, the marker detector 4 may be provided with shielding, and the separation device 3 or transporter may be configured to move the laundry pieces past the shielding in order to be detectable by the marker detector.

The ejection device 6 is positioned towards the input section 21 with respect to the processing section 22. As such, when a marker signal represents that no marker is present in the gripped laundry piece, the laundry piece may be released above the ejection device 6 in a position of the gripper 3, 3' that is positioned towards the input section 21.

The gripper 3, 3' is configured to release a gripped laundry piece above the ejection device 6 while moving from the marker detector towards the input section for gripping a new piece of laundry, and the gripper is configured to move towards the processing section 22 only when the marker signal indicates that a marker is present in the gripped laundry piece, such that movement between the marker detector and the processing section is only performed when actually required for the respective gripped piece of laundry.

The separation device 3 comprises a textile gripper 32 configured to remove laundry from the transporter 2 for separation, and to position laundry on the transporter at processing section 22 and/or on the ejector 6 on ejection entry 61 in dependence on the marker signal.

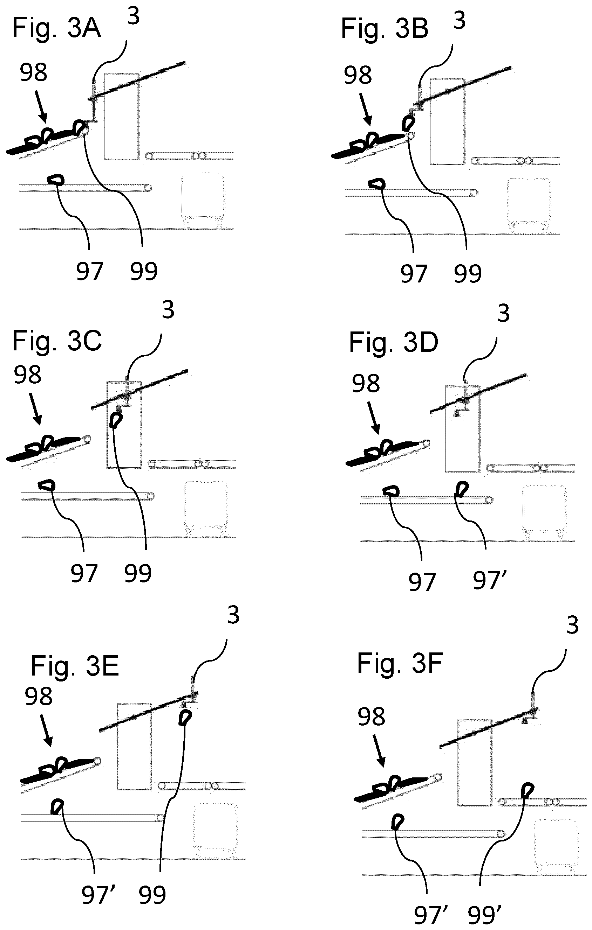

The textile gripper 31 is suited for handling laundry 99, e.g. for picking up a piece of laundry in the input position at the end of buffer section 23 and depositing the piece of laundry in the output position, e.g. above the ejector entry 61 or above the processing section 22. The gripper comprises a mounting section 32 configured to be attached to a gripper mover 7 to move the textile gripper between at least a laundry input position, as shown in Fig. 3A, and a laundry output position, as shown in Figs. 3D and 3F.

The textile gripper further comprises a gripping section 33 attached to the mounting section 32 and comprising a first gripping member 330 having a first gripping surface 331 that is rotatable about a first rotation axis 332 and a second gripping member 333 having a second gripping surface 334 that is rotatable about a second rotation axis 335; and a drive unit 34 coupled to the gripping section 33 and configured to drive the first gripping member 330 and the second gripping member 333 with respect to each other. The drive unit 34 is configured to rotate and to move the first gripping member 330 and the second gripping member 333, but may alternatively also rotate and/or move only one of the gripping members 330, 333. The drive unit 34 is configured to drive both first gripping member and the second gripping member in this embodiment, but may be configured to drive one of the gripping members only, and/or two drive units may be provided.

The gripping section 33 is integral with the mounting section 32, is arranged on an opposite outer end of the gripper, and at least partially houses the drive unit 34. The gripping section may comprise a third and/or fourth gripping member. The first gripping member 330 and the second gripping member 333 are counter-rotatable in opposite directions with respect to each other, such that the counter-rotation allows a piece of laundry 99 to be gripped between the first 331 and second 334 surfaces.

The gripping members 330, 333 are provided with one or more protruding gripping elements 35 that extend radially outwards from the first 331 and/or second 334 gripping surface, that are arranged to engage with the fabric of a laundry piece 99 and are configured to, with the counter-rotation, provide a wrinkle in the laundry 99 to be gripped between the first and second surfaces.

The gripping elements 35 protrude perpendicular from the gripping surface 331, but may also be arranged skewed thereto, e.g. a longitudinal axis of each gripping element may have an angle of 0-180 degrees with the gripping surface, for example 75-105 degrees with the gripping surface, such as approximately 90 degrees in the shown embodiment.

All of the gripping members 331, 333 are provided with multiple gripping elements 35 that are configured to, with the counter-rotation, engage, i.e. come into contact with, the piece of laundry 99 to be gripped, for example with an exposed upper surface thereof.

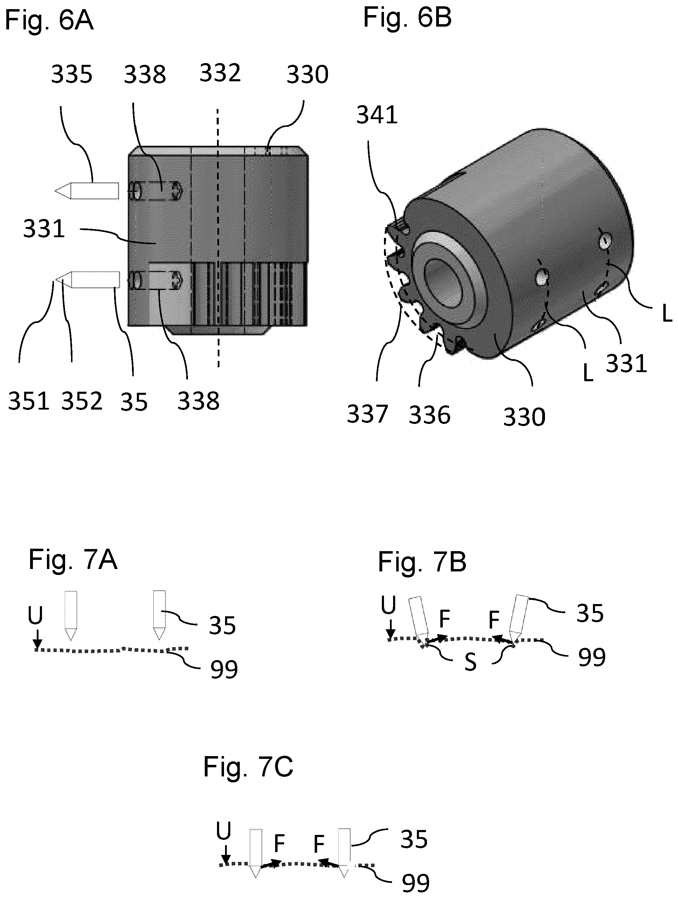

The gripping elements 35, as shown in Fig. 7A, are configured to, upon coming into contact with the laundry piece 99, exert a wrinkling force F, substantially in the plane of the fabric, i.e. acting between an upper surface and a lower surface thereof, and acting in upward direction, on the laundry piece in addition to a friction force as shown in Fig. 7B. Therewith, the gripping elements 35 are configured to deform the fabric 99 such that in the upper surface U side surface sections S are formed. The gripping elements 35 are configured to, with the counter-rotation, exert a wrinkling force on a side surface section S of the fabric, in contrast with a friction force that would normally be exerted on a top surface U of the fabric only.

In another embodiment, as shown in Fig. 7C, the gripping elements 35 are configured to at least partially protrude into the fabric of a laundry piece 99. The gripping elements 35 comprise a pricking section 352, as depicted in Fig. 6A, configured to prick into a fabric of a laundry piece, i.e. to deform the fabric within a plane of the fabric to provide room for the gripping elements 35. It has been found that by actually protruding into the fabric, a wrinkling force may be provided from within the fabric, rather than from a side surface section S of the fabric.

The gripping elements 35 shown are substantially cylindrical and comprise a circular cross section having a relatively small outer contour. An outer diameter of the gripping elements 35 is less than 4 mm, in particular less than 2,5 mm. It has been found that such dimensions may surprisingly contribute higher chance of gripping a desired amount of laundry, e.g. to grip a single piece of laundry.

A length of the gripping elements 35 is relatively small. The gripping elements 35 are releasably attached to the gripping members 330, 333 in gripping element mounting slots 338, but may additionally or alternatively be adjustable, e.g. by varying a depth of mounting slots 338, e.g. be providing an actuator in the gripping members 330, 333.

A protruding length of the gripping elements 35 is less than 4 mm, in particular less than 2,5 mm, and a total length of the protruding elements 35 is larger than the protruding length. The gripping elements 35, towards their respective radial outer ends 351, comprise a pointed pricking section 352. The pointed section 352 is conical but may also be frustoconical or have another shape. A height of the pointed section is approximately equal to the protruding length, i.e. less than 4 mm, in particular less than 2,5 mm. In addition or alternative to the shown gripping elements 35, varying cross sections, shapes and/or varying dimensions may be provided.

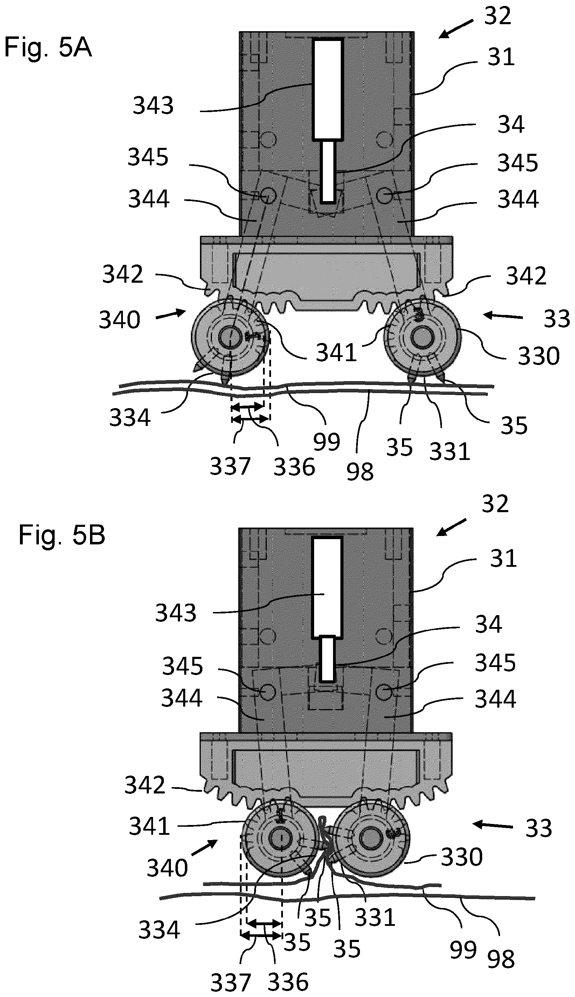

The first rotation axis 332 and the second rotation axis 335 are aligned with each other, in parallel. The textile gripper 331 is configured to output a gripped laundry piece at output location O by rotating the first gripping member and second gripping member in respective directions opposite to the counter-rotation. The first 331 and/or second 334 gripping surface, as also shown in Figs. 5A-5B, are substantially cylindrical. In addition to the gripping elements, the first and/or second gripping surface may comprise a coating, and/or a microscopically or macroscopically structured surface.

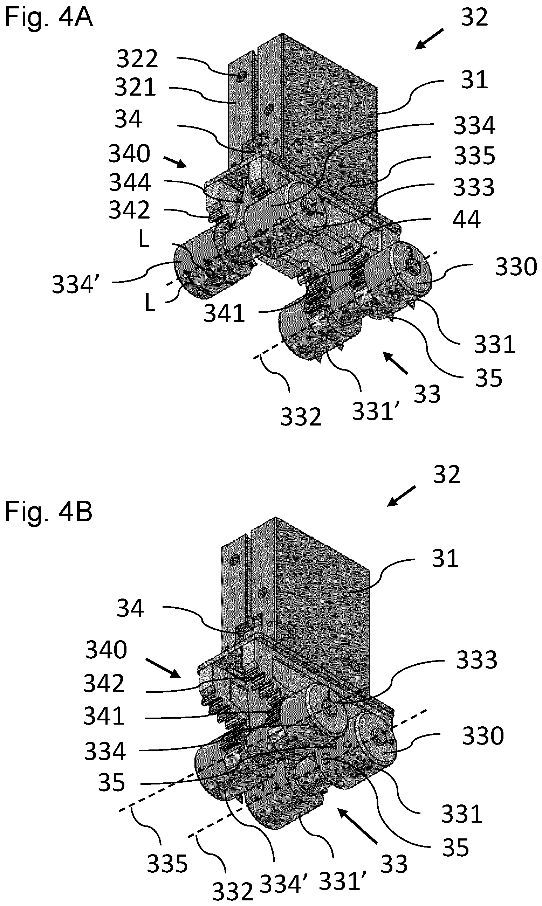

The drive unit 34 is configured to adjust a distance between the first 332 and the second 335 rotation axes during counter-rotation of the first gripping member (330) and the second gripping member (333) to move the gripper between a gripping state, as shown in Figs. 4A, 5A, and an open state, as in Figs. 4B, 5B, in which the respective rotation axes are arranged further away from each other than in the gripping state, in which the first and second rotation axes are arranged closest to each other and a distance between the first gripping surface 331 and the second gripping surface 334 is approximately equal to a protruding length of the gripping elements 35, in particular with the addition of a small space margin. The distance is less than 5 mm, in particular less than 4 mm in the gripping state.

The drive unit 34 is configured to adjust the distance between the first and the second rotation axes during the counter-rotation of the first gripping member and/or the second gripping member by rolling the gripping members 330, 333 with respect to the mounting section 332, such that when moving towards the gripping state, the first and/or second gripping surfaces are moved towards each other and vice versa. In particular, the drive unt 34 is configured to, when the gripper is arranged in the laundry input position on a laundry piece, move the first and second rotation axes 332, 335 towards each other while rotating, e.g. counter-rotating, the respective gripping surfaces 331, 334 in opposite directions towards each other into a gripping state and, e.g. when the gripper is arranged in the laundry output position, move the first and second rotation axes 332, 335 away from each other while rotating, e.g. counter-rotating, the respective gripping surfaces 331, 334 in opposite directions away from each other into the open state.

The drive unit 34 comprises a gear mechanism 340 arranged recessed in the first and/or second gripping member with respect to the first and/or second gripping surface, respectively, and which performs the combined counter-rotation and distance adjustment of the gripping members 330, 333. The gear mechanism 340 comprises a rack 342 and pinion 341, and moves the gripping members 330, 333 via the rack 342 and pinion 341. The rack 342 is mounted stationary to the mounting section 332, and the pinion 341 is rotatably mounted to the first 332 and/or second rotation axis 335 and coupled to the first 330 and/or second 333 gripping member to transfer a movement from the drive unit 34 towards the first 331 and/or second 334 gripping surface.

The rack 342 is curved, such that the respective gripping member 330, 333, when moving and rotating along the rack 342 with the respective pinion 341, follows a curved trajectory, e.g. such that the first 332 and/or second 335 rotation axis is configure to follow a curved trajectory when the gripper is moving between the open state and the gripping state and such that when the gripper 331 is positioned above a laundry piece, the first 330 and/or second 333 gripping members are moved towards each other and towards the laundry piece during the counter-rotation.

The drive mechanism 34 comprises a drive gear, i.e. the pinion 341, arranged adjacent to the first and/or second gripping member to drive the respective gripping member and partially recessed in the first 330 and/or second 333 gripping member with respect to the first 331 and/or second 334 gripping surface, respectively, such that an effective teeth radius 336 of the gear mechanism is smaller than an average outer radius 337 of the first and/or second gripping surface.

The gripping elements 35 protrude with respect to the drive gear 341, such that a rotation speed of the gripping elements is relatively high with respect to a rotation speed of the drive gear 341.

The first and second gripping member each comprise multiple gripping elements 35 extending from the respective gripping surface and that are arranged such that, in the gripping state, as shown in Fig. 5B, the gripping elements of the first and second gripping member are interleaved with each other, i.e. the gripping elements 35 protruding from the second gripping member 333 are arranged in between gripping elements 35 protruding from the first gripping member 330 and/or vice versa.

At least two of the gripping elements 35, as shown in Fig. 4A, are, in a rotation direction about the first 332 and/or second 335 rotation axis, arranged in line L with each other. The gripping elements 35 are arranged in rows of in-line L gripping elements 35. The rows L are arranged next to each other in a direction parallel to the rotation axis 332, 335 are symmetrical to each other. Multiple rows, i.e. two rows L are provided on each single gripping member 330, 333, in the shown embodiments.

The drive unit 34 comprises a longitudinal actuator 343 that is rotatably mounted between the mounting section 332 and the gripping section 33, and is configured to move the first 330 and/or second gripping members 333 between the gripping state and the open state by a linear actuation movement, i.e. to change in length upon actuation. The linear actuator 343 for example comprises a hydraulic, pneumatic or electric cylinder.

The drive unit 34 comprises a rotatable arm 344 that is rotatably mounted to the gripping section 33 via the longitudinal actuator 343 and that extends towards the first 330 and/or second 333 gripping member, wherein the longitudinal actuator 343 is configured to rotate the rotatable arm 344, and wherein the respective first and/or second gripping member is configured to be moved between the open state and the gripping state via the rotatable arm. Multiple rotatable arms 344 are provided connected to the same longitudinal actuator, wherein each rotatable arm extends towards a respective gripping member 330, 333. This way, both gripping members may be moved by a single actuator, to further enhance compactness of the gripper.

The rotatable arms 344 are each rotatably connected to the rotation axis 332, 335 of the first and/or second gripping member, which are configured to be moved across the rack 342 via the rotatable arms 344, whereby the pinion 341 thereby causes a rotation of the respective gripping member.

The first 330 and second 333 gripping member each comprise two gripping surfaces 331, 331', 334, 334' arranged on opposite sides of the rotatable arm 344, and wherein the respective two gripping surfaces 334, 334', 331, 331', are connected to each other via the first and/or second rotation axis 344, respectively.

In an embodiment, the textile gripper comprises a mounting section configured to be attached to a gripper mover to move the textile gripper between at least a laundry input position and a laundry output position. The gripper mover may be configured to move the textile gripper between, e.g. above, the transporter and the ejection device.

The gripper mover may be configured to move the textile gripper above the input and/or output position, e.g. in a horizontal and/or vertical direction. The mounting section may comprise a mounting surface for engaging with the gripper mover, for example via a shape lock, via a snap fit, bolts, pins, glue, screws, etc and/or via a force lock, e.g. by being clamped.

The gripper mover 7 and/or drive unit 340 is configured to, when arranged on a laundry piece 99, as depicted in Fig. 3A, move the gripper into a gripping state. The gripper 31 may detect positioning on the transporter and/or a laundry piece via sensors, e.g. via a force sensor, proximity sensor and/or optical sensor. The gripper 31 then grips a top fabric layer of a laundry piece 99 as the gripping elements protrude into the laundry piece 99, i.e. deforming the piece of laundry to be gripped.

Subsequently, the gripper mover 7 and/or the drive unit 340 move the gripper 31 upwardly away from the transporter 2, as depicted in Fig. 3B. This way, other laundry pieces 98 may fall off the gripped laundry piece and remain on the transporter 2. The gripper mover 7 and/or drive unit 340 may be configured to, upon gripping, move the gripper 31 past the marker detector 4 for detecting whether a marker is present in the gripped laundry piece 99, as shown in Fig. 3C, and to move the laundry piece 99 further along the transportation path TP, as shown in Fig. 3E.

The ejection device 6 and the processing section 22 of the transporter 2 are arranged underneath the marker detector. The gripper 31 is configured to, upon provision of a marker signal by the detector 4, move from the gripping state into the open state to release the gripped laundry piece 99, either above the processing section 22 of the transporter 2, if the marker signal represents a marker in the gripped laundry piece, and to move from the gripping state into the open state above the entry 61 of ejection device 6, if the marker signal represents no marker in the gripped laundry piece 99. Therewith, the separation device 3 is configured to, upon detection of a marker in the marker signal, allow further movement of the respective separated piece 99 of laundry along the transportation path TP, e.g. towards processing section 22, and to, when no marker is represented in the marker signal, arrange the respective piece of laundry on the ejection device 6.

The gripper 31 is subsequently moved back to the input position on the transporter as shown in Fig. 3A, and the process can be repeated. This process may continue as long as laundry 98 is present on the transporter.

Unmarked laundry is positioned on the ejection device 6, as shown in Fig. 3D, and may subsequently, e.g. when another piece of unmarked laundry 97' is positioned thereon, and/or when removal location 63 is empty, be moved from one of the buffer positions P to an adjacent one of the buffer positions P, e.g. to the left as shown in Fig. 3F. This way, the ejection entry 31 is kept free.

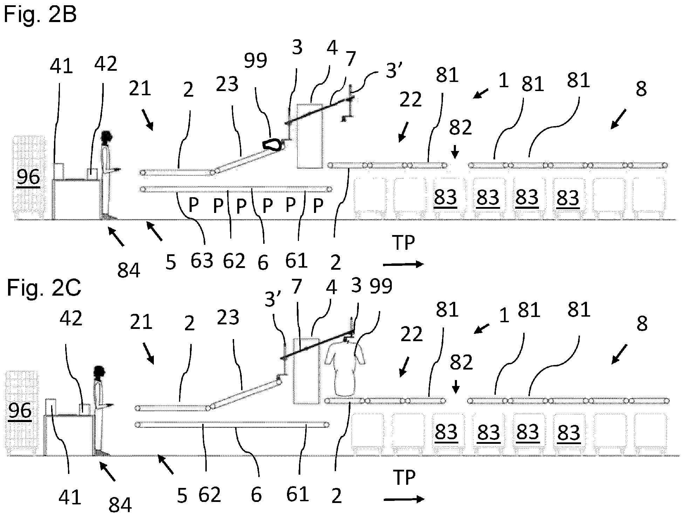

The marker detector 4 may for example be configured to detect the laundry property. The laundry handling assembly as shown in Figs 2A-2C further comprises a processing device 8, in this embodiment a sorting device comprising multiple movable conveyors 81, that are configured to arrange an opening 82 above a selected container 83 to combine pieces of laundry 99 in respective containers 83, e.g. on the basis of origin, property and/or type of laundry pieces.

### CLAUSES

Additional and/or alternative embodiments of the invention may be described as follows:
E1. Dirty laundry handling device (1), comprising:
   - a transporter (2) for transporting dirty laundry along transportation path, extending from an input section (21) of the transporter, where laundry enters the transporter, towards a processing section (22), where laundry is processed, e.g. sorted and/or cleaned;
   - a separation device (3) arranged at or near the transporter between the input section and the processing section and configured to separate the laundry into separate laundry pieces that can be processed individually;
   - a marker detector (4) configured to provide a marker signal representative for detection of a laundry marker, e.g. a label or RFID chip, in the laundry piece transported along the transportation path;
   wherein the dirty laundry handling device further comprises:
   - a marking location (5) configured to receive a piece of laundry for marking, e.g. by providing a label or RFID chip thereto; and
   - an ejection device (6), functionally associated with the marker detector and configured to move unmarked laundry, for which no marker is represented in the marker signal, towards the marking location.
E2. Dirty laundry handling device according to the preceding embodiment, wherein the separation device (3) is configured to provide laundry pieces towards the ejection device (6) or towards the processing section (22) in dependence on the marker signal.
E3. Dirty laundry handling device according to any of the preceding embodiments, wherein the transporter (2) and/or the ejection device (6) comprises a buffer section (23, 62) configured to buffer input laundry and/or unmarked laundry, respectively, such that the separation device (3) and/or marker detector (4) may continue to function even when temporarily no laundry is provided at the input section and/or when provided laundry comprises an unmarked laundry piece.
E4. Dirty laundry handling device according to the preceding embodiment, wherein the ejection device (6) is configured to buffer unmarked pieces of laundry separately from each other.
E5. Dirty laundry handling device according to the preceding embodiment, wherein the ejection device comprises an ejection entry (61), configured to receive ejected laundry, and an ejection buffer (62), comprising multiple buffer positions and configured to buffer unmarked laundry, wherein the ejection device is configured to move each unmarked laundry piece successively past the multiple buffer positions towards the marking location.
E6. Dirty laundry handling device according to any of the preceding embodiments, wherein the ejection device comprises a conveyor extending between ejection entry and the marking location.
E7. Dirty laundry handling device according to any of the preceding embodiments, wherein the marking location (5) is provided in the area of the input section (21), e.g. adjacent to the input section.
E8. Dirty laundry handling device according to the preceding embodiment, wherein the marker detector (4) is arranged with respect to the transporter such that laundry arranged on the transporter (2) cannot be detected by the marker detector, wherein the separation device (3), e.g. the textile gripper, is configured to move transported laundry from the transporter and towards the marker detector, such that the laundry piece can be detected by the marker detector.
E9. Dirty laundry handling device according to any of the preceding embodiments, wherein the separation device (3) comprises a textile gripper and wherein the textile gripper is configured to grip laundry from the transporter (2) for separation.
E10. Dirty laundry handling device according to any of the preceding embodiments, comprising a textile gripper (31) for handling laundry towards and/or away from the transporter, which comprises:
   - a mounting section (32) configured to be attached to a gripper mover to move the textile gripper between at least a laundry input position and a laundry output position;
   - a gripping section (33) attached to the mounting section and comprising a first gripping member (330) having a first gripping surface (331) that is rotatable about a first rotation axis (332) and a second gripping member (333) having a second gripping surface (334) that is rotatable about a second rotation axis (335); and
   - a drive unit (34) coupled to the gripping section and configured to drive the first gripping member (330) and the second gripping member (333) with respect to each other;

   wherein the first gripping member (330) and the second gripping member (333) are counter-rotatable in opposite directions with respect to each other, such that the counter-rotation allows a piece of laundry to be gripped between the first gripping surface (331) and second gripping surface (334),
   for example wherein the gripping members (330, 333) are provided with one or more protruding gripping elements (35) that extend radially outwards from the first and/or second gripping surface (331, 334), that are arranged with respect to each other to engage with the fabric of a laundry piece and are configured to, with the counter-rotation, provide a wrinkle in the fabric that is gripped between the first and second surfaces.
E11. Dirty laundry handling device according to the preceding embodiment, wherein the gripping elements (35) are configured to at least partially protrude into the fabric of a laundry piece.
E12. Sorting assembly, comprising at least two dirty laundry handling devices (1) according to any of the preceding embodiments, e.g. each having a capacity of at least 1000 or at least 1200 pieces of laundry per hour, sharing a single marking location and wherein the respective ejection devices are each configured to move laundry to the shared marking location.
E13. Method for sorting dirty laundry, comprising the steps of:
   - providing dirty laundry, e.g. in bulk, near an input section (21);
   - separating, with a separation device (3), the laundry provided at the input section in separate laundry pieces;
   - detecting, with a marker detector (4), whether a laundry marker, e.g. a visual label or RFID chip, is present in one of the laundry pieces;
   wherein the method further comprises the step of:
   - when a laundry marker is detected, providing the laundry piece towards the processing section (22), or
      when no laundry marker is detected, moving the unmarked laundry piece towards a marking location (2) with an ejection device (6) to mark the respective piece of laundry, e.g. by providing a label or RFID chip thereto.
E14. Method according to the preceding embodiment, further comprising the steps of, when no laundry marker is detected, marking the respective laundry piece at the marking location (2); and providing the laundry piece again at the input section (21), wherein the step of marking the unmarked laundry piece is performed simultaneously with the steps of providing dirty laundry and/or separating the provided laundry.
E15. Method according to any of the preceding embodiments E13-E14, further comprising the steps of:
   - determining an origin and/or type of provided dirty laundry;
   - counting numbers of laundry pieces in dependence of laundry marker detections, and storing the counted number with respective origin and/or type of the laundry;
   - processing the laundry pieces at a processing section;
   - combining processed laundry pieces to obtain a predetermined combination of origin and/or type of laundry pieces.
E16. Method according to any of the preceding embodiments E13-E15, using the dirty laundry handling device according to any of the embodiments E1-E11.

## Claims

1. Dirty laundry handling device (1), comprising:
- a transporter (2) for transporting dirty laundry along transportation path, comprising an input section (21) and a processing section (22) and extending from the input section (21) of the transporter, where laundry enters the transporter, towards the processing section (22), where laundry is processed, e.g. sorted and/or cleaned;
- a separation device (3) arranged at or near the transporter between the input section and the processing section and configured to separate the laundry into separate laundry pieces that can be processed individually;
- a marker detector (4) configured to provide a marker signal representative for detection of a laundry marker, e.g. a label or RFID chip, in the laundry piece transported along the transportation path;
- a marking location (5) configured to receive a piece of laundry for marking, e.g. by providing a label or RFID chip thereto; and
- an ejection device (6), functionally associated with the marker detector and configured to move unmarked laundry, for which no marker is represented in the marker signal, towards the marking location;
**characterised in that** the dirty laundry handling device further comprises:
- a laundry property acquisition unit (41) for acquiring laundry property information representative for a property, e.g. a type or origin, of a piece of laundry, and configured to acquire laundry property information for unmarked laundry moved by the ejection device; and
- a marker preparation unit (42) configured to prepare a marker by associating the respective acquired laundry property information for the respective unmarked laundry with a marker provided at the marking location.

2. Dirty laundry handling device according to the preceding claim, wherein the laundry property acquisition unit (41) is configured to acquire laundry property information for a piece of unmarked laundry on the basis of the laundry property information of neighbouring laundry that is located, within a predetermined range from the piece of unmarked laundry.

3. Dirty laundry handling device according to the preceding claim, wherein the laundry property information for a piece of unmarked laundry is determined on the basis of the marker signal received for the respective neighbouring laundry.

4. Dirty laundry handling device according to any of the preceding claims, wherein the ejection device (6) comprises a buffer section (23, 62) configured to buffer unmarked laundry,
wherein the laundry property acquisition unit (41) and the marker preparation unit (42) are configured to cooperate with the buffer section, such that pieces of unmarked laundry from the buffer section and respective corresponding markers associated with acquired laundry property information are provided at the marking location in the same order.

5. Dirty laundry handling device according to the preceding claim, wherein the ejection device (6) is configured to buffer unmarked pieces of laundry separately from each other,
for example, wherein the ejection device comprises an ejection entry (61), configured to receive ejected laundry, and an ejection buffer (62), comprising multiple buffer positions and configured to buffer unmarked laundry, wherein the ejection device is configured to move each unmarked laundry piece successively past the multiple buffer positions towards the marking location; and/or for example, wherein the ejection device comprises a conveyor extending between ejection entry and the marking location.

6. Dirty laundry handling device according to any of the preceding claims, wherein the marking location (5) is provided in the area of the input section (21), e.g. adjacent to the input section.

7. Dirty laundry handling device according to the preceding claim, wherein the marker detector (4) is arranged with respect to the transporter such that laundry arranged on the transporter (2) cannot be detected by the marker detector, wherein the separation device (3), e.g. the textile gripper, is configured to move transported laundry from the transporter and towards the marker detector, such that the laundry piece can be detected by the marker detector.

8. Dirty laundry handling device according to any of the preceding claims, wherein the separation device (3) comprises a textile gripper and wherein the textile gripper is configured to grip laundry from the transporter (2) for separation.

9. Dirty laundry handling device according to the preceding claim, comprising multiple textile grippers arranged to operate simultaneously.

10. Dirty laundry handling device according to any of the preceding claims, comprising a textile gripper (31) for handling laundry towards and/or away from the transporter, which comprises:
- a mounting section (32) configured to be attached to a gripper mover to move the textile gripper between at least a laundry input position and a laundry output position;
- a gripping section (33) attached to the mounting section and comprising a first gripping member (330) having a first gripping surface (331) that is rotatable about a first rotation axis (332) and a second gripping member (333) having a second gripping surface (334) that is rotatable about a second rotation axis (335); and
- a drive unit (34) coupled to the gripping section and configured to drive the first gripping member (330) and the second gripping member (333) with respect to each other;
wherein the first gripping member (330) and the second gripping member (333) are counter-rotatable in opposite directions with respect to each other, such that the counter-rotation allows a piece of laundry to be gripped between the first gripping surface (331) and second gripping surface (334),
for example wherein the gripping members (330, 333) are provided with one or more protruding gripping elements (35) that extend radially outwards from the first and/or second gripping surface (331, 334), that are arranged with respect to each other to engage with the fabric of a laundry piece and are configured to, with the counter-rotation, provide a wrinkle in the fabric that is gripped between the first and second surfaces,
for example, wherein the gripping elements (35) are configured to at least partially protrude into the fabric of a laundry piece.

11. Sorting assembly, comprising at least two dirty laundry handling devices (1) according to any of the preceding claims, e.g. each having a capacity of at least 1000 or at least 1200 pieces of laundry per hour, sharing a single marking location and wherein the respective ejection devices are each configured to move laundry to the shared marking location.

12. Method for sorting dirty laundry, comprising the steps of:
- providing dirty laundry, e.g. in bulk, near an input section (21);
- separating, with a separation device (3), the laundry provided at the input section in separate laundry pieces;
- detecting, with a marker detector (4), whether a laundry marker, e.g. a visual label or RFID chip, is present in one of the laundry pieces;
- when a laundry marker is detected, providing the laundry piece towards the processing section (22), or
when no laundry marker is detected, moving the unmarked laundry piece towards a marking location (2) with an ejection device (6) to mark the respective piece of laundry, e.g. by providing a label or RFID chip thereto,
further comprising the steps of, when no laundry marker is detected, marking the respective laundry piece at the marking location (2);
**characterised in that** the method further comprises the step of providing the laundry piece again at the input section (21).

13. Method according to the preceding claim, wherein the step of marking the unmarked laundry piece is performed simultaneously with the steps of providing dirty laundry and/or separating the provided laundry.

14. Method according to the preceding claim, further comprising the steps of:
- determining an origin and/or type of provided dirty laundry;
- counting numbers of laundry pieces in dependence of laundry marker detections, and storing the counted number with respective origin and/or type of the laundry;
- processing the laundry pieces at a processing section;
- combining processed laundry pieces to obtain a predetermined combination of origin and/or type of laundry pieces.

15. Method according to any of the preceding claims 13-14, using the dirty laundry handling device and/or sorting assembly according to any of the claims 1-11.
